# EUROPÄISCHE PATENTSCHRIFT

(11) **EP 2 137 943 B1**
(45) Veröffentlichungstag und Bekanntmachung des Hinweises auf die Patenterteilung: **14.03.2018**
(21) Anmeldenummer: 08734706.8
(22) Anmeldetag: 20.03.2008
(51) Int. Cl.: H04L 29/08

(54) **PORTABLE DATENTRÄGER ALS WEB-SERVER**
PORTABLE DATA CARRIER AS A WEB SERVER
SUPPORTS DE DONNÉES PORTATIFS EN TANT QUE SERVEURS WEB

(30) Priorität: 20.03.2007 DE 102007013339
(43) Veröffentlichungstag der Anmeldung: 30.12.2009
(73) Patentinhaber: Giesecke+Devrient Mobile Security GmbH, 81677 München (DE)
(72) Erfinder: SPITZ, Stephan, 81247 München (DE)
(86) Internationale Anmeldenummer: PCT/EP2008/002274
(87) Internationale Veröffentlichungsnummer: WO 2008/113599

(56) Entgegenhaltungen:
- EP-A- 1 739 603
- WO-A-03/094474
- WO-A-2005/091107
- US-A1- 2002 138 549
- URIEN P: "Internet card, a smart card as a true Internet node" COMPUTER COMMUNICATIONS, ELSEVIER SCIENCE PUBLISHERS BV, AMSTERDAM, NL, Bd. 23, Nr. 17, 1. November 2000 (2000-11-01), Seiten 1655-1666, XP004238469 ISSN: 0140-3664
- DISCLOSED ANONYMOUSLY: "Displaying broken URLs with indicators in web browsers" RESEARCH DISCLOSURE, MASON PUBLICATIONS, HAMPSHIRE, GB, Bd. 504, Nr. 33, 1. April 2006 (2006-04-01), XP007136090 ISSN: 0374-4353
- MALANDRINO ET AL: "Tackling Web dynamics by programmable proxies" COMPUTER NETWORKS, ELSEVIER SCIENCE PUBLISHERS B.V., AMSTERDAM, NL, Bd. 50, Nr. 10, 14. Juli 2006 (2006-07-14), Seiten 1564-1580, XP005429507 ISSN: 1389-1286

## Beschreibung

Die Erfindung betrifft ein Verfahren zum Bereitstellen von Daten durch einen Server auf einem portablen Datenträger für ein mit dem portablen Datenträger verbundenes Endgerät sowie einen derartigen portablen Datenträger.

Es ist bekannt, dass portable Datenträger, insbesondere Chipkarten wie (U)SIM-Mobilfunkkarten oder Internet-Chipkarten, als Web-Server dienen können. Derart eingerichtete Datenträger verfügen über eine Web-Server-Applikation und werden beispielsweise als Authentisierungs-Proxy eingesetzt, um sichere Internetverbindungen zwischen einem Nutzer und einem Internet-Portal, beispielsweise bei einer Online-Bank, herzustellen. Dabei befindet sich der Datenträger als Proxy zwischen einem Client, also beispielsweise einem Browser auf einem Endgerät des Nutzers, und einem externen Server, also beispielsweise einem Server der Online-Bank im Internet. Der Proxy verhält sich dabei gegenüber dem Client wie ein Server, gegenüber dem externen Server jedoch wie ein Client. Indem auf dem Datenträger ein auf Integrität geprüfter Hyperlink zu dem Internet-Portal und geheime Login-Daten des Nutzers sicher gespeichert sind, ist ein sicheres Anmelden des Nutzers bei dem Online-Portal über den Datenträger gewährleistet.

Allgemein verläuft bei einer derartigen oder ähnlichen Verwendung eines Datenträgers mit einem Web-Server der gesamte Datenverkehr während einer bestehenden Kommunikationsverbindung zwischen einem Endgerät eines Nutzers und einem externen Server über den Datenträger. Dies führt bei großen zu übertragenden Datenmengen, beispielsweise für graphische Elemente, mitunter zu Problemen hinsichtlich der Speicherkapazität des portablen Datenträgers und der erreichbaren Datenübertragungsrate der Datenübertragung von dem Web-Server über den portablen Datenträger zu dem Endgerät.

Chipkarten, die einen Webserver enthalten sind beispielsweise beschrieben in WO 03/094474 A1 oder dem Artikel "Internet card, a smart card as a true Internet node" von P. Urien, Computer Communications 23 (2000) 1655-1666. Unterschiedliche Servertechnologien für das Internet mit mehreren, miteinander verbundenen Servern werden beschrieben in EP 1739 603 A1 und den Artikeln "Displaying broken URLs with indicators in a web browser", anonym aus Research Disclosure Vol. 504, No. 33, sowie "Tackling Web dynamics by programmable proxies" von Malandrino et al, Computer Networks Vol. 50, No. 10,1564-1580.

Das Dokument US 2002/138549 A1 aus dem Stand der Technik offenbart ein Verfahren zur Übertragung eines Datenstroms zwischen einem entfernten Server und einem Terminal mit einem Smartcard-Lesegerät über ein Netzwerk vom Internet-Typ. Eine Smartcard stellt dem Terminal die Funktion eines Client/Web Servers, um bidirektionale Datenaustauschsitzungen zwischen dem Terminal und dem entfernten Server zu ermöglichen. Weiter enthält die Smartcard ein Filter, mit dem ein zwischen dem Terminal und dem entfernten Server übertragener Datenstrom gefiltert werden kann.

Die WO 2005/091107 A1 offenbart ein Browser-Plug-In für einen Web-Browser, mit dessen Hilfe es ermöglicht wird, URLs (Uniform Ressource Locator) von Web-Ressourcen, wie z.B. Web-Seiten oder Web-Diensten (auch Web-Services genannt), auf potentiell von den Ressourcen ausgehende Sicherheitsrisiken zu überprüfen. Dazu vergleicht das Plug-In eine von dem Browser übergebene URL, bevor diese aufgelöst und die entsprechende Web-Ressource geladen wird, mit URLs in einer Liste vermeintlich sicherheitskritischer URLs (einer so genannten "Blacklist") und gibt eine Sicherheitswarnung aus, falls die übergebene URL in der Liste zu finden und also als potentiell sicherheitsgefährdend anzusehen ist. Die Liste kann intern gespeichert sein oder von dem Plug-In über eine Datenbank interaktiv abgefragt werden.

Es ist demnach die Aufgabe der vorliegenden Erfindung, ein Verfahren zum effektiven Bereitstellen von Daten durch einen Server auf einem portablen Datenträger für ein mit dem Datenträger verbundenes Endgerät vorzuschlagen.

Diese Aufgabe wird durch ein Verfahren und einen portablen Datenträger mit den Merkmalen der nebengeordneten Ansprüche gelöst. Vorteilhafte Ausgestaltungen und Weiterbildungen sind in den davon abhängigen Ansprüchen angegeben.

Zunächst empfängt bei dem erfindungsgemäßen Verfahren zum Bereitstellen von Hypertext-Daten durch einen Hypertext-Server auf einem portablen Datenträger für ein mit dem portablen Datenträger verbundenes Endgerät der Hypertext-Server eine Hypertext-Anfrage von dem Endgerät. Daraufhin stellt der Hypertext-Server Hypertext-Daten bereit, die die Hypertext-Anfrage betreffen. Der Hypertext-Server sendet schließlich die bereitgestellten Hypertext-Daten als Hypertext-Antwort an das Endgerät. Bei dem Bereitstellen der Hypertext-Daten wird zumindest ein in den Hypertext-Daten enthaltener Hyperlink auf Integrität geprüft. Der geprüfte Hyperlink ist im Fall einer positiv verlaufenden Prüfung in der an das Endgerät gesendeten Hypertext-Antwort enthalten.

Auf diese Weise wird erreicht, dass Hypertext-Daten und die darin enthaltenen Hyperlinks, die von dem Hypertext-Server an das Endgerät gesendet werden, von dem Hypertext-Server auf dem portablen Datenträger geprüft werden können, um die Hyperlinks zusammen mit den Hypertext-Daten anschließend geprüft an das Endgerät zu senden. Ein effektives und sicheres Bereitstellen von Hypertext-Daten durch den Hypertext-Server auf dem portablen Datenträger für ein mit dem portablen Datenträger verbundenes Endgerät wird dadurch gewährleistet.

Insbesondere von dem Endgerät angefragte sicherheitskritische Hypertext-Daten können auf diese Weise von dem Hypertext-Server bereitgestellt und geprüft werden, so dass der Hypertext-Server als zentrale Sicherheitsinstanz gegenüber dem Endgerät fungiert, indem er notwendige Sicherheitsmechanismen und -funktionen in einer hinreichend abgesicherten Weise bereitstellt.

Dabei kann ein Prüfen eines Hyperlinks sowohl ein Prüfen der Verfügbarkeit der Hypertext-Daten umfassen, auf die der Hyperlink verweist, als auch eine nachstehend beschriebene Integritätsprüfung des Hintergrund-Servers, auf dem die Hypertext-Daten vorliegen, auf welche der Hyperlink verweist.

Im Rahmen der vorliegenden Erfindung werden unter Hypertext-Daten Daten und Dienste verstanden, die elektronisch, magnetisch, optisch oder auf andere Weise gespeichert an einem oder mehreren Orten vorliegen und ab- und/ oder aufgerufen werden können, wobei einzelne Untereinheiten der Daten oder Dienste miteinander durch Verweise aufeinander, so genannte Hyperlinks, verknüpft sein können. Hypertext-Daten sind also nicht auf Daten oder Dienste beschränkt, die mittels des http-Kommunikationsprotokolls übertragbar sind, vielmehr stellen letztere eine Teilmenge der Hypertext-Daten im Sinne der Erfindung dar. Der Begriff "Hypertext" ist also im Zusammenhang mit der vorliegenden Erfindung in einem umfassenden Sinne zu verstehen und bezeichnet jede offene oder abgeschlossene elektronische Umsetzung des Verweis-Knoten-Prinzips zur Strukturierung von textuellen und/ oder multimedialen Informationen, Daten oder Diensten.

Das World Wide Web (WWW) ist ein Beispiel für solche Hypertext-Daten, aber auch ein Wiki, also eine meist innerhalb eines Netzwerks verfügbare Sammlung von mittels Hyperlinks verknüpfter Seiten, die von den jeweiligen Nutzern nicht nur gelesen, sondern auch online geändert werden können. Dementsprechend bezeichnet eine Hypertext-Anfrage eine Anfrage nach Hypertext-Daten und eine Hypertext-Antwort eine Hypertext-Daten liefernde Antwort auf eine Hypertext-Anfrage. Hypertext-Dienste als Untermenge der Hypertext-Daten repräsentieren über Hyperlinks aufrufbare Programme und dergleichen, die Hypertext-Daten bearbeiten und Hypertext-Anfragen behandeln können, beispielsweise Web-Services, die über das Internet, vorzugsweise von anderen Programmen, aufgerufen werden können.

Ein Hypertext-Server ist vorzugsweise eine Software-Applikation, die eingerichtet ist, Hypertext-Anfragen zu empfangen und Hypertext-Antworten als Antwort auf Hypertext-Anfragen zu senden.

Das Endgerät, z.B. ein Personal Computer (PC) oder ein Mobilfunkendgerät, ist mit dem portablen Datenträger über eine geeignete Kommunikationsschnittstelle verbunden. Diese kann eine kontaktbehaftet oder kontaktlos hergestellte Kommunikationsverbindung mit dem portablen Datenträger über ein geeignetes Kommunikationsprotokoll unterstützen.

Das Verfahren wird mittels eines erfindungsgemäßen Datenträgers durchgeführt. Dieser umfasst neben einem Speicher zum Speicher von Daten und Programmcode, einer Datenkommunikationsschnittstelle zur Kommunikation mit einem Lesegerät und einem Prozessor eine in dem Speicher gespeicherte Hypertext-Server-Applikation, die auf dem Prozessor ausführbar ist. Die Hypertext-Server-Applikation ist eingerichtet, über die Datenkommunikationsschnittstelle eine Hypertext-Anfrage von einem Endgerät zu empfangen, die Hypertext-Anfrage betreffende Hypertext-Daten bereitzustellen, und die bereitgestellten Hypertext-Daten als Hypertext-Antwort über die Datenkommunikationsschnittstelle an das Endgerät zu senden. Die Hypertext-Server-Applikation ist des Weiteren eingerichtet, bei dem Bereitstellen der Hypertext-Daten zumindest einen in den Hypertext-Daten enthaltenen Hyperlink zu prüfen.

Der geprüfte Hyperlink kann dabei auf von dem Endgerät abrufbare Hypertext-Daten oder auf einen von dem Endgerät aufrufbaren Hypertext-Dienst verweisen.

Es ist gleichfalls möglich, ausgehend von den bereitgestellten Hypertext-Daten, die die Hypertext-Anfrage betreffen, eine auf den Hypertext-Daten basierende Hypertext-Antwort zu erzeugen, die dann an das Endgerät gesendet wird.

Bei dem Erzeugen der Hypertext-Antwort wird zumindest ein Teil der Hypertext-Daten in Form von zumindest einem auf diesen zumindest einen Teil der Hypertext-Daten verweisenden Hyperlink in die Hypertext-Antwort integriert.

Auf diese Weise ist es für den Hypertext-Server möglich, für das Endgerät effektiv auch große Mengen von Hypertext-Daten in Form von auf diese Datenmengen verweisenden Hyperlinks bereitzustellen, die beispielsweise multimediale Daten oder dergleichen umfassen. Die Datenübertragung dieser Mengen von Hypertext-Daten zu dem Endgerät muss dann nicht über den Datenträger abgewickelt werden, sondern kann von dem Endgerät durch Auflösen des von dem Hypertext-Server bereitgestellten Hyperlinks über eine andere Kommunikationsverbindung unter Umgehung des portablen Datenträgers geschehen. Eventuell auftretenden Problemen hinsichtlich Speicherkapazität und Datenübertragungsrate bei Übertragung großer Datenmengen über den portablen Datenträger kann auf diese Weise effektiv begegnet werden.

Gleichzeitig ist es dem Hypertext-Server weiterhin möglich, dem Endgerät Hypertext-Daten direkt und in gesicherter Weise bereitzustellen, indem die Übertragung von Hypertext-Daten über den Hypertext-Server auf dem portablen Datenträger zu dem Endgerät verläuft.

Auch diese alternative Ausführungsform dient also einem effektiven Bereitstellen von Daten durch einen Server auf einem portablen Datenträger für ein mit dem portablen Datenträger verbundenes Endgerät.

Beim Bereitstellen der Hypertext-Daten durch die Hypertext-Server-Applikation kann ein Teil der Hypertext-Daten von einem oder mehreren

Hintergrund-Servern von der Hypertext-Server-Applikation auf den portablen Datenträger geladen werden. Hintergrund-Server sind von der Hypertext-Server-Applikation verschiedene, mit der Hypertext-Server-Applikation über ein geeignetes Kommunikationsprotokoll vernetzte Server-Applikationen. Die Hintergrund-Server werden auf von dem portablen Datenträger verschiedenen Geräten, so genannten Hosts, ausgeführt, welche mit dem portablen Datenträger vernetzt sind. Hintergrund-Server können beispielsweise Web-Server im Internet sein.

Ein Teil der Hypertext-Daten kann auch von der Hypertext-Server-Applikation selbst erzeugt werden oder bereits auf dem portablen Datenträger gespeichert sein.

Ein Prüfen von Hyperlinks kann eine Verfügbarkeitsprüfung und eine Integritätsprüfung umfassen. Bei der Verfügbarkeitsprüfung wird geprüft, ob die Hypertext-Daten oder -Dienste, auf die der Hyperlink verweist, auf dem entsprechenden Hintergrund-Server tatsächlich verfügbar sind. Verschiedene Formen der Integritätsprüfung, die allgemein die Vertrauenswürdigkeit von Hintergrund-Servern prüft, auf die der Hyperlink verweist, oder von denen Hypertext-Daten geladen werden, werden nachstehend exemplarisch dargestellt. Erfindungsgemäß wird die Integrität der Hintergrund-Server von der Hypertext-Server-Applikation geprüft, bevor die Hypertext-Antwort für das Endgerät erzeugt wird bzw. die bereitgestellten Hypertext-Daten als Hypertext-Antwort an das Endgerät gesendet werden. Gemäß einer ersten Alternative der Erfindung wird die Richtigkeit des von dem Hintergrund-Server benutzten Zertifikats geprüft, womit dieser z.B. einen dem Hintergrund-Server zuzuordnenden öffentlichen Schlüssel für ein asymmetrisches Verschlüsselungsverfahren zertifiziert. Mit Hilfe dieses Verschlüsselungsverfahrens kann z.B. eine Kommunikationsverbindung mit dem Hintergrund-Server aufgebaut werden, wobei dann die Authentizität, Integrität und Vertraulichkeit der über diese Kommunikationsverbindung übertragenen Daten gewährleistet ist. Für die Integritätsprüfung sind beispielsweise auf dem portablen Datenträger Root-Zertifikate gespeichert und die Hypertext-Server-Applikation kann eine entsprechende Zertifikatskette von einem Root-Zertifikat bis zum Zertifikat eines Hintergrund-Servers validieren. Zusätzlich kann die Hypertext-Server-Applikation eine Kommunikationsverbindung zu einem OCSP-Server (Online Certificate Status Protocol) aufbauen und die Gültigkeit eines Hintergrund-Server-Zertifikats direkt prüfen.

Gemäß einer zweiten Alternative oder zusätzlich zur ersten Alternative kann im Rahmen der Integritätsprüfung die Korrektheit der Namensauflösung für einen Hintergrund-Server geprüft werden, d.h. die Umsetzung des Hintergrund-Server-Namens zu der entsprechenden IP-Adresse des Hintergrund-Servers. Im Speicher des portablen Datenträgers kann dafür eine Mehrzahl von Paaren von Servername und IP-Adresse gespeichert sein, für welche die Hypertext-Server-Applikation dann prüfen kann, ob die für den Hintergrund-Server bestimmten Parameter (Servername, IP-Adresse) mit den auf dem Datenträger gespeicherten Daten übereinstimmen.

Insbesondere können diejenigen Hintergrund-Server auf Integrität geprüft werden, auf denen Hypertext-Daten vorliegen, die in Form von darauf verweisenden Hyperlinks in die Hypertext-Antwort integriert werden. Zusätzlich zu den vorstehend beschriebenen Maßnahmen kann die Erreichbarkeit eines Hintergrund-Servers und die Verfügbarkeit der entsprechenden Hypertext-Daten auf diesem Hypertext-Server, auf welche ein Hyperlink verweist, geprüft werden und bei negativem Resultat gegebenenfalls ein Hyperlink bereitgestellt werden, der auf dieselben, verfügbaren Hypertext-Daten auf einem anderer, erreichbaren Hintergrund-Server verweist.

Weiterhin kann beim Prüfen eines Hyperlinks auf einen Hypertext-Dienst das Format des Hypertext-Dienstes geprüft werden, beispielsweise eines mittels WSDL (Web-Service Description Language) beschriebenen "Binding Templates" eines in einem UDDI ("Universal Description, Discovery and Integration") gelisteten Web-Service. Dabei gibt ein "Binding Template" z.B. Formate von Ein- und Ausgabe, Angaben über Ports, Protokolle, durchführbare Operationen und dergleichen für einen Web-Service an.

Es ist möglich, dass der Hypertext-Server dem Endgerät einen privilegierten Zugang zu Hypertext-Daten, insbesondere sicherheitskritischen Hypertext-Daten, über einen Hyperlink erst ermöglicht, wobei der Hyperlink in die an das Endgerät gesendete Hypertext-Antwort integriert ist. Beispielsweise kann in dem Speicher des portablen Datenträgers eine dem Endgerät zugehörige Authentisierungsinformation gespeichert sein, die im Endgerät selbst nicht vorhanden ist. Die Hypertext-Server-Applikation kann dann mittels dieser Authentisierungsinformation, beispielsweise einer PIN, im Namen des Endgeräts eine Kommunikationsverbindung mit dem Hintergrund-Server aufbauen. Die auf diese Weise hergestellte Kommunikationsverbindung stellt die Hypertext-Server-Applikation dann dem Endgerät mittels des in die Hypertext-Antwort integrierten Hyperlinks, beispielsweise für einen gewissen Zeitraum, zur Verfügung.

Vorzugsweise verläuft die Kommunikation zwischen dem Endgerät und der Hypertext-Server-Applikation verschlüsselt, d.h. die Hypertext-Server-Applikation ist eingerichtet, eine beispielsweise über SSL/TLS verschlüsselte Kommunikationsverbindung mit dem Endgerät aufzubauen, von dem Endgerät empfangene, verschlüsselte Daten zu entschlüsseln und verschlüsselte Daten an das Endgerät zu senden.

In einer bevorzugten Ausführungsform ist die Hypertext-Server-Applikation als Web-Server-Applikation implementiert, die eingerichtet ist, mittels des http-Kommunikationsprotokolls Hypertext-Anfragen von einem Endgerät zu empfangen und Hypertext-Antworten an das Endgerät zu senden. Dabei entspricht eine Hypertext-Anfrage vorzugsweise einer Anfrage nach einer über eine URL-Adresse adressierbaren Web-Ressource, wie beispielsweise einer Web-Seite oder einem Web-Service. Als Hypertext-Antwort für das Endgerät erzeugt die Hypertext-Server-Applikation eine mittels einer Auszeichnungssprache, vorzugsweise mittels HTML oder WML, strukturierte Antwort-Seite, z.B. in Form einer Web-Seite.

Der portable Datenträger kann z.B. eine (U)SIM-Mobilfunkkarte, eine Internet-Chipkarte oder ein USB-Token sein.

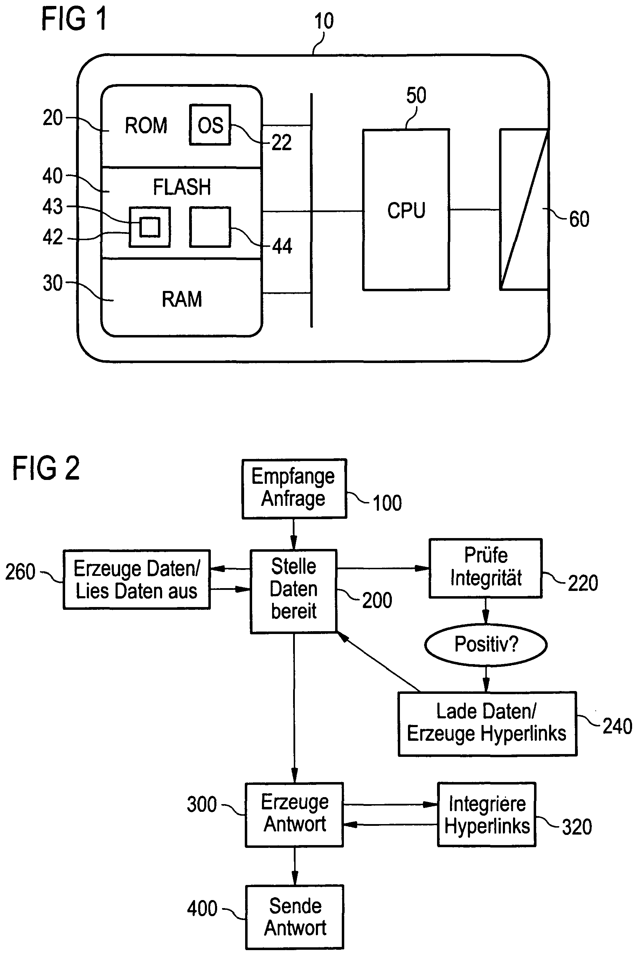

Nachfolgend wird die Erfindung anhand der begleitenden Zeichnungen beispielhaft beschrieben. Darin zeigen:
- Figur 1: eine bevorzugte Ausführungsform eines erfindungsgemäßen portablen Datenträgers;
- Figur 2: die Schritte einer bevorzugten Ausführungsform des erfindungsgemäßen Verfahrens; und
- Figur 3: schematisch die an einer bevorzugten Ausführungsform des erfindungsgemäßen Verfahrens beteiligten Komponenten und deren Zusammenwirken.
Mit Bezug auf Figur 1 umfasst ein als Chipkarte ausgebildeter portabler Datenträger 10 einen nichtflüchtigen, nicht wiederbeschreibbaren ROM-Speicher 20, in dem der Kern eines den Datenträger 10 steuernden Betriebssystems (OS) 22 gespeichert ist. Ein flüchtiger RAM-Speicher 30 liefert schnell zugreifbaren Arbeitsspeicher für einen Prozessor (CPU) 50. Ein nichtflüchtiger, wiederbeschreibbarer FLASH-Speicher 40 umfasst Speicherbereiche 42 und 44. In dem Speicherbereich 42 können Software-Applikationen gespeichert sein, z.B. die nachstehend genauer beschriebene Hypertext-Server-Applikation 43. Der Speicherbereich 44 ist zum Speichern von Daten vorgesehen, die von auf dem Prozessor 50 des Datenträgers 10 ausführbaren Applikationen erzeugt oder über eine Datenkommunikationsschnittstelle 60 zur Kommunikation mit einem Lesegerät in den Datenträger 10 eingebracht werden. Der Speicher 40 kann alternativ auch als EEPROM-Speicher oder dergleichen ausgebildet sein. Den Zugriff auf die Speicher 20, 30 und 40 wie auch auf die Datenschnittstelle 60 steuert das Betriebssystem 22.

Die Hypertext-Server-Applikation 43 kann beispielsweise als Web-Server-Applikation implementiert sein. Dabei ist die Hypertext-Server-Applikation 43 eingerichtet, über die Datenkommunikationsschnittstelle 60 des Datenträgers 10 Hypertext-Anfragen von einem Endgerät zu empfangen. Hypertext-Anfragen können beispielsweise an die Web-Server-Applikation 43 von einem Endgerät, beispielsweise einem PC oder einem Mobilfunkendgerät, über das http-Kommunikationsprotokoll gestellte Anfragen nach einer Web-Ressource, also z.B. einer Web-Seite oder einem Web-Service, sein, welche über eine URL-Adresse adressierbar ist. Aber auch andere Hypertext-Anfragen aus einer Menge von über Hyperlinks verknüpften Hypertext-Daten, die an einem oder mehreren Orten in elektronischer, magnetischer, optischer oder ähnlich geeigneter Form gespeichert sind, sind möglich.

Die Hypertext-Server-Applikation 43 ist eingerichtet, Hypertext-Daten bereitzustellen, die die empfangene Hypertext-Anfrage betreffen. Dazu kann die Hypertext-Server-Applikation 43 Hypertext-Daten, die in dem Speicherbereich 44 des Speichers 40 gespeichert sind, auslesen, selbst Hypertext-Daten erzeugen oder Hypertext-Daten von einem oder mehreren Hintergrund-Servern laden.

Hintergrund-Server sind beliebige, von der Hypertext-Server-Applikation 43 verschiedene Server-Applikationen, die auf von dem portablen Datenträger 10 verschieden Hosts ausgeführt werden. Diese Hosts sind mit dem portablen Datenträger 10 vernetzt, beispielsweise über das Internet, und eine Datenübertragung zwischen der Hypertext-Server-Applikation 43 und den Hintergrund-Servern ist möglich, beispielsweise über das http- Kommunikationsprotokoll. Andere Kommunikationsnetze und -protokolle liegen gleichfalls im Rahmen der Erfindung.

Die Hypertext-Server-Applikation 43 erzeugt, basierend auf den bereitgestellten Hypertext-Daten, eine Hypertext-Antwort als Antwort auf die von dem Endgerät empfangene Hypertext-Anfrage. Dazu ist die Hypertext-Server-Applikation 43 eingerichtet, neben selbst erzeugten und/ oder aus dem Speicherbereich 44 ausgelesenen Hypertext-Daten und von Hintergrund-Servern geladenen Daten, die jeweils direkt in die erzeugte Hypertext-Antwort integriert werden, Hyperlinks in die Hypertext-Antwort zu integrieren. Diese Hyperlinks verweisen auf die Hypertext-Daten, die die Hypertext-Anfrage betreffen. Es können beispielsweise Text-Bestandteile einer von einem Endgerät angeforderten Web-Seite direkt in die Hypertext-Antwort integriert werden, wohingegen sich auf derselben Web-Seite befindliche graphische Elemente oder online-Werbung dem Endgerät nur über in die erzeugte Hypertext-Antwort integrierte Hyperlinks zu Verfügung gestellt werden. Zum Aufrufen/ Auslesen der entsprechenden Hypertext-Daten muss auf dem Endgerät dann erst der Hyperlink aufgelöst werden. Die Hypertext-Server-Applikation 43 ist dabei in der Lage, die entsprechenden, auf der Web-Seite als lokale Hyperlinks angegebenen Verweise in absolute Hyperlinks unter Angabe der entsprechenden Hintergrund-Server-Adresse zu expandieren.

Eine auf diese Weise erzeugte Hypertext-Antwort kann beispielsweise eine HTML- oder WML-Seite sein, die von einem ersten Hintergrund-Server geladene Daten enthält, die mittels aus dem Speicher 40 ausgelesenen oder von der Hypertext-Server-Applikation 43 erzeugten Steuerbefehlen strukturiert werden. Des Weiteren umfasst diese Hypertext-Antwort Hyperlinks, die auf Hypertext-Daten verweisen, die auf dem erstem oder einem oder mehreren anderen Hintergrund-Servern liegen.

Der Hypertext-Server kann eine Hypertext-Antwort aber auch dadurch erhalten, dass er beispielsweise von einem Hintergrund-Server geladene Daten, die der Hypertext-Anfrage direkt entsprechen, beispielsweise eine einfache Web-Seite ohne graphische Elemente, unverändert an das Endgerät durchreicht, nachdem die in den als Hypertext-Antwort durchgereichten Hypertext-Daten enthaltenen Hyperlinks wie nachstehend beschrieben geprüft worden sind. Separate Schritte des Erzeugens der Hypertext-Antwort und des Integrierens von Hyperlinks in diese Hypertext-Antwort sind dann nicht mehr notwendig.

Die Hypertext-Server-Applikation 43 ist eingerichtet, die Hypertext-Antwort über die Datenkommunikationsschnittstelle 60 an das Endgerät zu senden. Dabei kann das Endgerät auf verschiedene Weise mit dem portablen Datenträger verbunden sein. Z.B. kann das Endgerät ein PC sein, der über ein Kartenlesegerät auf einen als Chipkarte ausgebildeten portablen Datenträger 10 zugreift, oder das Endgerät ist ein Mobilfunkendgerät, das mit Hilfe eines J2ME-Midlets auf einen als (U)SIM-Mobilfunkkarte ausgebildeten portablen Datenträger 10 zugreift.

Der Speicherbereich 44 des Speichers 40 des portablen Datenträgers 10 kann ein Endgerät betreffende Authentisierungsinformationen enthalten, beispielsweise eine PIN oder ein elektronisches Passwort. Mittels dieser Authentisierungsinformation kann die Hypertext-Server-Applikation 43 im Namen des Endgeräts eine Kommunikationsverbindung mit einem Hintergrund-Server herstellen und dem Endgerät auf diese Weise einen privilegierten Zugang zu den entsprechenden Hypertext-Daten bereitstellen. Es ist möglich, dass die entsprechende Authentisierungsinformation im Endgerät nicht vorliegt, sodass zum Zustandekommen der Kommunikationsverbindung zwischen dem Endgerät und dem Hintergrund-Server die Hypertext-Server-Applikation 43 unerlässlich ist. Beispielsweise kann die Hypertext-Server-Applikation 43 als Authentisierungs-Proxy beim Herstellen einer Kommunikationsverbindung zu einer Online-Bank dienen. Als Authentisierungsinformation ist z.B. eine PIN oder ein Passwort eines Nutzers des Endgeräts sicher auf dem portablen Datenträger 10 gespeichert.

Die Kommunikationsverbindung zwischen dem Endgerät und dem Hintergrund-Server kann dann direkt über den portablen Datenträger 10 und die Hypertext-Server-Applikation 43 hergestellt werden oder von der Hypertext-Server-Applikation 43 dem Endgerät als in die Hypertext-Antwort integrierten Hyperlink bereitgestellt werden. Das Endgerät kann dann diese über den Hyperlink bereitgestellte Kommunikationsverbindung nutzen und unabhängig von der Hypertext-Server-Applikation 43 und dem portablen Datenträger 10 die Hypertext-Daten, auf welche der Hyperlink verweist, von dem entsprechenden Hintergrund-Server beziehen.

Die Hypertext-Server-Applikation 43 ist eingerichtet, Hyperlinks und Hintergrund-Server, auf die diese Hyperlinks verweisen, auf Verfügbarkeit und Integrität zu prüfen. Insbesondere ist vorgesehen, dass die Integrität derjenigen Hintergrund-Server geprüft wird, auf denen Hypertext-Daten liegen, auf die mittels von der Hypertext-Server-Applikation 43 in die Hypertext-Antwort integrierten Hyperlinks verwiesen wird. Im Rahmen einer Prüfung werden solche Hyperlinks auf Verfügbarkeit geprüft um sicherzustellen, dass die Hypertext-Daten, auf die verwiesen wird, tatsächlich vorhanden und verfügbar sind. Verläuft eine solche Prüfung negativ, d.h. sind die entsprechenden Hypertext-Daten an der durch den Hyperlink angegebenen Stelle nicht verfügbar oder ist der entsprechende, die Hypertext-Daten speichernde Hintergrund-Server nicht erreichbar, so kann die Hypertext-Server-Applikation 43 gegebenenfalls einen neuen Hyperlink erzeugen, der auf verfügbare identische Hypertext-Daten auf einem erreichbaren Hintergrund-Server verweist.

Eine Integritätsprüfung umfasst allgemein eine Prüfung der Vertrauenswürdigkeit der Zertifikate der Hintergrund-Server. Dazu kann in dem Speicherbereich 44 des Speichers 40 des portablen Datenträgers 10 eine Anzahl von Root-Zertifikaten gespeichert sein. Die Hypertext-Server-Applikation 43 ist eingerichtet, eine Zertifikatskette von einem Root-Zertifikat hinab zu einem Hintergrund-Server-Zertifikat zu validieren. Zusätzlich kann die Hypertext-Server-Applikation über OCSP (Online Certificate Status Protocol) eine Gültigkeitsabfrage des Zertifikats eines Hintergrund-Servers bewirken, um gegebenenfalls eine zeitweilig eingetretene Ungültigkeit eines solchen Zertifikats zu erkennen.

Es ist weiterhin möglich, dass die Hypertext-Server-Applikation 43 im Rahmen einer Integritätsprüfung die Namensauflösung des Server-Namens eines Hintergrund-Servers zu einer entsprechenden IP-Adresse kontrolliert. Dies ist beispielsweise dadurch möglich, dass in dem Speicherbereich 44 eine Mehrzahl von Server-Namen mit dazugehörigen IP-Adressen gespeichert sind, die der Hypertext-Server-Applikation als Hintergrund-Server bekannt und als solche akzeptiert sind. Ist nun ein im Rahmen der Integritätsprüfung ermitteltes Paar von Server-Namen und IP-Adresse nicht in der in dem Speicherbereich 44 verfügbaren Mehrzahl von bekannten und akzeptierten Paaren zu identifizieren, so kann der entsprechende Hintergrund-Server als nicht akzeptiert abgelehnt werden. Für nachgefragte Web-Services kann zusätzlich, beispielsweise über UDDI, die Verfügbarkeit spezifischer Funktionsaufrufe geprüft werden.

Nur solche Hypertext-Daten, für welche im Rahmen der Integritätsprüfung die beschriebenen Prüfungen derjenigen Hintergrund-Server, auf denen die entsprechenden Hypertext-Daten vorliegen, positiv verlaufen sind, werden direkt oder mittels darauf verweisender Hyperlinks in die Hypertext-Antwort integriert oder als Hypertext-Antwort durchgereicht.

Die Hypertext-Server-Applikation 43 ist eingerichtet, mit dem Endgerät über eine gesicherte Kommunikationsverbindung Daten auszutauschen. Die Kommunikationsverbindung kann zum Übertragen von Hypertext-Daten, beispielsweise HTML-Seiten, über das SSL/TLS-Protokoll verschlüsselt sein. Es ist auch möglich, dass die Hypertext-Server-Applikation 43 über SOAP (ursprünglich für "Simple Object Access Protocol") eine mit XML-Verschlüsselung und XML-Signaturen gesicherte Verbindung zu einem auf dem Endgerät ausgeführten Web-Service/RPC ("Remote Procedure Call")-Client herstellt.

Mit Bezug auf Figur 2 werden die Schritte einer bevorzugten Ausführungsform des erfindungsgemäßen Verfahrens beschrieben. Dabei ist die Hypertext-Server-Applikation 43 eine Web-Server-Applikation 43 auf dem portablen Datenträger 10 und das Endgerät ein PC oder Mobilfunkendgerät, welches mit dem portablen Datenträger wie vorstehend beschrieben verbunden ist. Der portable Datenträger 10 kann als Internet-Chipkarte, (U)SIM-Mobilfunkkarte, USB-Token oder dergleichen ausgebildet sein.

In Schritt 100 empfängt die Web-Server-Applikation 43 auf dem portablen Datenträger 10 eine Hypertext-Anfrage von dem Endgerät über eine wie vorstehend beschrieben gesicherte Kommunikationsverbindung ("Empfange Anfrage"). Die Hypertext-Anfrage kann eine von einem auf dem Endgerät ausgeführten Web-Browser gestellte Anfrage nach einer Web-Seite sein oder auch ein von einem auf dem Endgerät ausgeführten Web-Server/RPC-Client nachgefragter Web-Service bzw. ausgeführter RPC-Aufruf.

In Schritt 200 stellt die Web-Server-Applikation 43 Hypertext-Daten bereit, die die Hypertext-Anfrage betreffen ("Stelle Daten bereit").

Es ist möglich, dass ein Teil der durch die Hypertext-Anfrage nachgefragten Hypertext-Daten in dem Speicherbereich 44 des Speichers 40 des portablen Datenträgers 10 gespeichert sind, wie beispielsweise von dem Endgerät immer wieder nachgefragte Hypertext-Daten, oder von der Web-Server-Applikation selbst erzeugt werden können, beispielsweise Steuerbefehle einer Auszeichnungssprache wie HTML oder WML zum strukturierten, nachstehend beschriebenen Erzeugen der Hypertext-Antwort. Solche Art von Hypertext-Daten werden in Schritt 260 bereitgestellt ("Erzeuge Daten/Lies Daten aus").

Hypertext-Daten, die von der Web-Server-Applikation 43 nicht selbst erzeugt werden können und die nicht auf dem portablen Datenträger 10 vorliegen, werden von der Web-Server-Applikation über Hintergrund-Server bereitgestellt. Dazu wird in Schritt 220 wie vorstehend beschrieben zuerst die Integrität eines entsprechenden Hintergrund-Servers geprüft ("Prüfe Integrität"). Verlaufen alle Prüfungen positiv ("Positiv?"), so lädt die Web-Server-Applikation 43 in Schritt 240 wie vorstehend beschrieben die einer Hypertext-Anfrage direkt entsprechenden Daten, die unverändert an das Endgerät weitergereicht werden können, oder erzeugt Hyperlinks auf zumindest einen Teil der Hypertext-Daten und lädt gegebenenfalls die restlichen die Hypertext-Anfrage betreffenden Hypertext-Daten von dem Hintergrund-Server ("Lade Daten/Erzeuge Hyperlinks"). Es ist natürlich möglich, dass Hyperlinks, die auf Hypertext-Daten auf mehreren verschiedenen Hintergrund-Servern bereitliegen, erzeugt werden und Hypertext-Daten von verschiedenen Hintergrund-Servern geladen werden.

Auf Basis der in Schritt 200 mittels der Schritte 220, 240 und 260 bereitgestellten Hypertext-Daten erzeugt die Web-Server-Applikation 43 in Schritt 300 eine Hypertext-Antwort für das Endgerät ("Erzeuge Antwort").

Dazu werden in Schritt 320 die erzeugten Hyperlinks in eine Hypertext-Antwort-Seite, die vorzugsweise mittels einer Auszeichnungssprache, wie beispielsweise HTML oder WML, aufgebaut ist, integriert ("Integriere Hyperlinks"). Die Hyperlinks verweisen dabei auf die Hypertext-Anfrage betreffende Hypertext-Daten, beispielsweise (Teile von) HTML-Seiten oder Web-Services/RPC-Server. Von der Web-Server-Applikation erzeugte und/ oder aus dem Speicherbereich 44 des Speichers 40 des Datenträgers 10 ausgelesene Hypertext-Daten können ebenfalls Bestandteile der Hypertext-Antwort sein.

In Falle einer Hypertext-Antwort, die aus Hypertext-Daten besteht, die entweder von dem portable Datenträger selbst erzeugt und/ oder von einen Hintergrund-Server geladen worden sind und unverändert an das Endgerät durchgereicht werden kann, kann der Schritt 320 entfallen.

In Schritt 400 sendet die Webserver-Applikation die in Schritt 300 erzeugte Hypertext-Antwort über die gesicherte Kommunikationsverbindung an das Endgerät ("Sende Antwort"). Auf die Hypertext-Daten in der Hypertext-Antwort kann das Endgerät dann, sofern die entsprechenden Hypertext-Daten als solche in die Hypertext-Antwort integriert sind, direkt zugreifen, oder aber über die in die Hypertext-Antwort integrierten Hyperlinks, dann über eine Kommunikationsverbindung, die nicht über die Web-Server-Applikation 43 und nicht über den portablen Datenträger 10 verläuft.

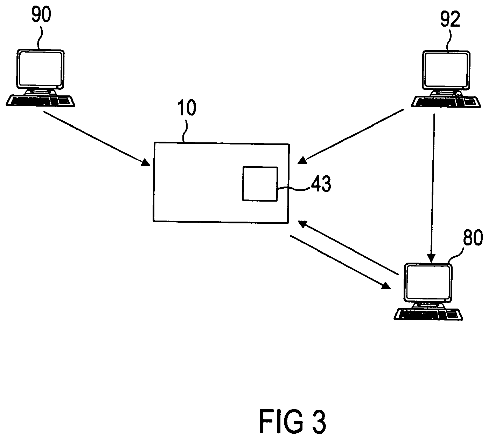

Figur 3 zeigt schematisch die an dem Verfahren beteiligten Komponenten. Die Hypertext-Server-Applikation 43 auf dem portablen Datenträger 10 empfängt eine Hypertext-Anfrage von einem Endgerät 80 eines Nutzers, beispielsweise ausgehend von einer auf dem Endgerät 80 ausgeführten Web-Browser-Applikation und betreffend eine Web-Seite, die auf einem Hintergrund-Server 90 vorliegt. Die Hypertext-Server-Applikation 43 kann die Webseite von dem Hintergrund-Server 90 auf den portablen Datenträger 10 laden. Dabei kann die Webseite einen Hyperlink auf eine weitere Web-Ressource umfassen, beispielsweise auf eine weitere Webseite, die auf einem weiteren Hintergrund-Server 92 vorliegt. Die Hypertext-Server-Applikation 43 auf dem portable Datenträger 10 prüft diesen Hyperlink, wie vorstehend beschrieben, und sendet, falls die Prüfung positiv verlaufen ist, die Webseite mit dem geprüften Hyperlink an das Endgerät 80, welches dann mittels des geprüften Hyperlinks direkt und sicher auch auf die weitere Web-Seite auf dem weiteren Hintergrund-Server 92 zugreifen kann.

## Patentansprüche

1. Verfahren zum Bereitstellen von Hypertext-Daten durch einen Hypertext-Server (43) auf einem portablen Datenträger (10) für ein mit dem portablen Datenträger (10) verbundenes Endgerät (80), umfassend folgende Schritte in dem portablen Datenträger (10):
- Empfangen (100) einer Hypertext-Anfrage des Endgeräts (80) von dem Hypertext-Server (43);
- Bereitstellen (200) von Hypertext-Daten, die die Hypertext-Anfrage betreffen, durch den Hypertext-Server (43); und
- Senden (400) der bereitgestellten Hypertext-Daten als Hypertext-Antwort an das Endgerät (80);
**dadurch gekennzeichnet, dass** bei dem Bereitstellen (200) der Hypertext-Daten zumindest ein in den Hypertext-Daten enthaltener Hyperlink geprüft wird und der geprüfte Hyperlink in der Hypertext-Antwort enthalten ist, und dass das Prüfen des Hyperlinks eine Integritätsprüfung eines Hintergrund-Servers (90,92) umfasst, auf dem von dem Endgerät (80) abrufbare weitere Hypertext-Daten, auf welche der Hyperlink verweist, oder ein von dem Endgerät (80) aufrufbarer Hypertext-Dienst, auf welchen der Hyperlink verweist, vorliegen, wobei nur solche Hypertext-Daten, für welche im Rahmen der Integritätsprüfung die beschriebenen Prüfungen derjenigen Hintergrund-Server, auf denen die entsprechenden Hypertext-Daten vorliegen, positiv verlaufen sind, mittels darauf verweisender Hyperlinks in die Hypertext-Antwort integriert oder als Hypertext-Antwort durchgereicht werden, **weiter dadurch gekennzeichnet, dass** beim Prüfen des Hyperlinks ein Zertifikat des Hintergrund-Servers (90, 92) geprüft wird oder eine Namensauflösung des Hintergrund-Servers (90, 92) geprüft wird.

2. Verfahren nach Anspruch 1, **dadurch gekennzeichnet, dass** beim Bereitstellen (200) der Hypertext-Daten zumindest ein Teil der Hypertext-Daten in Form von zumindest einem auf den zumindest einen Teil der Hypertext-Daten verweisenden Hyperlink repräsentiert wird.

3. Verfahren nach einem der Ansprüche 1 bis 2, **dadurch gekennzeichnet, dass** beim Prüfen des Hyperlinks zusätzlich die Verfügbarkeit der weiteren Hypertext-Daten, auf die der Hyperlink verweist, oder die Verfügbarkeit des Hypertext-Dienstes, auf den der Hyperlink verweist, geprüft wird.

4. Verfahren nach einem der Ansprüche 1 bis 3, **dadurch gekennzeichnet, dass** beim Prüfen des Hyperlinks zusätzlich das Format eines Hypertext-Dienstes geprüft wird, auf den der Hyperlink verweist.

5. Verfahren nach einem der Ansprüche 1 bis 4, **dadurch gekennzeichnet, dass** die bereitgestellten Hypertext-Daten Ergebnis-Daten eines der Hypertext-Anfrage entsprechenden Aufrufs eines Hypertext-Dienstes durch den Hypertext-Server (43) repräsentieren.

6. Verfahren nach einem der Ansprüche 1 bis 5, **dadurch gekennzeichnet, dass** bei dem Bereitstellen (200) der Hypertext-Daten zumindest ein Teil der Hypertext-Daten von zumindest dem Hintergrund-Server (90) auf den Hypertext-Server (43) geladen wird (240).

7. Verfahren nach einem der Ansprüche 1 bis 5, **dadurch gekennzeichnet, dass** der geprüfte Hyperlink auf den Hintergrund-Server als einen zweiten Hintergrund-Server (92) verweist und dass bei dem Bereitstellen (200) der Hypertext-Daten zumindest ein Teil der Hypertext-Daten von zumindest einem ersten Hintergrund-Server (90) auf den Hypertext-Server (43) geladen wird (240).

8. Verfahren nach einem der Ansprüche 1 bis 7, **dadurch gekennzeichnet, dass** der Hypertext-Server (43) dem Endgerät (80) einen privilegierten Zugang zu Hypertext-Daten oder Hypertext-Diensten bereitstellt, auf die der geprüfte Hyperlink in der Hypertext-Antwort verweist.

9. Verfahren nach einem der Ansprüche 1 bis 8, **dadurch gekennzeichnet, dass** der Hypertext-Server (43) die Hypertext-Anfrage in verschlüsselter Form empfängt und entschlüsselt und die Hypertext-Antwort in verschlüsselter Form an das Endgerät (80) sendet.

10. Verfahren nach einem der Ansprüche 1 bis 9, **dadurch gekennzeichnet, dass** der Hypertext-Server (43) ein Web-Server ist und mittels des http-Kommunikationsprotokolls die Hypertext-Anfrage empfängt und die Hypertext-Antwort sendet und die Hypertext-Anfrage des Endgeräts (80) eine URL-Adresse ist, die auf eine Web-Ressource verweist, insbesondere auf eine Web-Seite oder einen Web-Service.

11. Verfahren nach Anspruch 10, **dadurch gekennzeichnet, dass** der Hypertext-Server (43) die Hypertext-Antwort als eine mittels einer Auszeichnungssprache, insbesondere mittels HTML oder WML, strukturierten Web-Seite erzeugt.

12. Portabler Datenträger (10), umfassend einen Speicher (40), einen Prozessor (50), eine Datenkommunikationsschnittstelle (60) zur Kommunikation mit einem Lesegerät sowie eine Hypertext-Server-Applikation (43), die auf dem Prozessor (50) ausführbar ist und eingerichtet ist,
- über die Datenkommunikationsschnittstelle (60) eine Hypertext-Anfrage von einem mit dem Datenträger (10) verbundenen Endgerät (80) zu empfangen;
- die Hypertext-Anfrage betreffende Hypertext-Daten bereitzustellen;
- die bereitgestellten Hypertext-Daten als Hypertext-Antwort über die Datenkommunikationsschnittstelle (60) an das Endgerät (80) zu senden;
**dadurch gekennzeichnet, dass** die Hypertext-Server-Applikation (43) weiterhin eingerichtet ist, bei dem Bereitstellen der Hypertext-Daten zumindest einen in der Hypertext-Antwort enthaltenen Hyperlink zu prüfen und dass das Prüfen des Hyperlinks eine Integritätsprüfung eines Hintergrund-Servers (90,92) umfasst, auf dem von dem Endgerät (80) abrufbare weitere Hypertext-Daten, auf welche der Hyperlink verweist, oder ein von dem Endgerät (80) aufrufbarer Hypertext-Dienst, auf welchen der Hyperlink verweist, vorliegen, wobei nur solche Hypertext-Daten, für welche im Rahmen der Integritätsprüfung die beschriebenen Prüfungen derjenigen Hintergrund-Server, auf denen die entsprechenden Hypertext-Daten vorliegen, positiv verlaufen sind, mittels darauf verweisender Hyperlinks in die Hypertext-Antwort integriert oder als Hypertext-Antwort durchgereicht werden, **weiter dadurch gekennzeichnet, dass** beim Prüfen des Hyperlinks ein Zertifikat des Hintergrund-Servers (90,92) geprüft wird oder eine Namensauflösung des Hintergrund-Servers (90,92) geprüft wird.

13. Portabler Datenträger (10) nach Anspruch 12, angepasst zur Ausführung eines Verfahrens nach einem der Ansprüche 2 bis 11.

14. Portabler Datenträger (10) nach einem der Ansprüche 12 oder 13, **dadurch gekennzeichnet, dass** der Datenträger (10) als (U)SIM-Mobilfunkkarte oder als Internet-Chipkarte oder als USB-Token ausgebildet ist.

## Claims

1. A method for providing hypertext data through a hypertext server (43) on a portable data carrier (10) for a terminal (80) connected to the portable data carrier (10), comprising the following steps in the portable data carrier (10):
- receiving (100) a hypertext query of the terminal (80) by the hypertext server (43);
- providing (200) hypertext data relating to the hypertext query through the hypertext server (43); and
- sending (400) the provided hypertext data as a hypertext response to the terminal (80);
**characterized in that** upon the providing (200) of the hypertext data at least one hyperlink contained in the hypertext data is checked and the checked hyperlink is contained in the hypertext response, and that the checking of the hyperlink comprises an integrity check of a background server (90, 92) on which further hypertext data that are retrievable by the terminal (80) and to which the hyperlink points or a hypertext service that can be called up by the terminal (80) and to which the hyperlink points are present, wherein only such hypertext data for which the described checks of those background servers on which the corresponding hypertext data are present have turned out positive within the integrity check are integrated into the hypertext response by means of hyperlinks pointing thereto or are relayed as a hypertext response,
further **characterized in that** upon the checking of the hyperlink a certificate of the background server (90, 92) is checked or a name resolution of the background server (90, 92) is checked.

2. The method according to claim 1, **characterized in that** upon the providing (200) of the hypertext data at least one portion of the hypertext data is represented in the form of at least one hyperlink pointing to the at least one portion of the hypertext data.

3. The method according to claim 1 or 2, **characterized in that** upon the checking of the hyperlink, additionally, the availability of the further hypertext data to which the hyperlink points, or the availability of the hypertext service to which the hyperlink points, is checked.

4. The method according to any of claims 1 to 3, **characterized in that** upon the checking of the hyperlink, additionally, the format of a hypertext service is checked to which the hyperlink points.

5. The method according to any of claims 1 to 4, **characterized in that** the provided hypertext data represent result data of a call of a hypertext service through the hypertext server (43) corresponding to the hypertext query.

6. The method according to any of claims 1 to 5, **characterized in that** upon the providing (200) of the hypertext data at least one portion of the hypertext data is loaded (240) from at least the background server (90) onto the hypertext server (43).

7. The method according to any of claims 1 to 5, **characterized in that** the checked hyperlink points to the background server as a second background server (92) and that upon the providing (200) of the hypertext data at least one portion of the hypertext data is loaded (240) from at least a first background server (90) onto the hypertext server (43).

8. The method according to any of claims 1 to 7, **characterized in that** the hypertext server (43) provides the terminal (80) with a privileged access to hypertext data or hypertext services to which the checked hyperlink in the hypertext response points.

9. The method according to any of claims 1 to 8, **characterized in that** the hypertext server (43) receives the hypertext query in encrypted form and decrypts it and sends the hypertext response to the terminal (80) in encrypted form.

10. The method according to any of claims 1 to 9, **characterized in that** the hypertext server (43) is a web server and receives the hypertext query and sends the hypertext response by means of the HTTP communication protocol, and the hypertext query of the terminal (80) is a URL address which points to a web resource, in particular to a web page or a web service.

11. The method according to claim 10, **characterized in that** the hypertext server (43) generates the hypertext response as a web page structured by means of a markup language, in particular by means of HTML or WML.

12. A portable data carrier (10), comprising a memory (40), a processor (50), a data communication interface (60) for communication with a reading device, and a hypertext server application (43) which is executable on the processor (50) and is adapted to
- receive via the data communication interface (60) a hypertext query from a terminal (80) connected to the data carrier (10);
- provide hypertext data relating to the hypertext query;
- send the provided hypertext data as a hypertext response via the data communication interface (60) to the terminal (80);
**characterized in that** the hypertext server application (43) is further arranged to check, upon the providing of the hypertext data, at least one hyperlink contained in the hypertext data, and that the checking of the hyperlink comprises an integrity check of a background server (90, 92) on which further hypertext data that are retrievable by the terminal (80) and to which the hyperlink points or a hypertext service that can be called up by the terminal (80) and to which the hyperlink points are present, wherein only such hypertext data for which the described checks of those background servers on which the corresponding hypertext data are present have turned out positive within the integrity check are integrated into the hypertext response by means of hyperlinks pointing thereto or are relayed as a hypertext response,
further **characterized in that** upon the checking of the hyperlink a certificate of the background server (90, 92) is checked or a name resolution of the background server (90, 92) is checked.

13. The portable data carrier (10) according to claim 12, adapted for executing a method according to any of claims 2 to 11.

14. The portable data carrier (10) according to any of claims 12 or 13, **characterized in that** the data carrier (10) is configured as a (U)SIM mobile communication card or as an Internet chip card or as a USB token.

## Revendications

1. Procédé de mise à disposition de données hypertextes par un serveur hypertexte (43) sur un support de données (10) portable, pour un terminal (80) relié au support de données (10) portable, comprenant les étapes suivantes dans le support de données (10) portable :
- réception (100) d'une demande hypertexte provenant du terminal (80) par le serveur hypertexte (43) ;
- mise à disposition (200) de données hypertextes concernant la demande hypertexte par le serveur hypertexte (43) ; et
- envoi(400) des données hypertextes mises à disposition, en tant que réponse hypertexte au terminal (80) ;
**caractérisé en ce que**, lors de la mise à disposition (200) des données hypertextes, au moins un hyperlien contenu dans les données hypertextes est vérifié et l'hyperlien vérifié est contenu dans la réponse hypertexte, et que la vérification de l'hyperlien comprend une vérification d'intégrité d'un serveur d'arrière-plan (90, 92) sur lequel se trouvent d'autres données hypertextes qui sont consultables par le terminal (80) et auxquelles l'hyperlien renvoie, ou un service hypertexte qui est consultable par le terminal (80) et auquel l'hyperlien renvoie, cependant qu'uniquement des données hypertextes pour lesquelles, dans le cadre de la vérification d'intégrité, les vérifications décrites des serveurs d'arrière-plan sur lesquels se trouvent les données hypertextes correspondantes ont abouti à un résultat positif sont intégrées au moyen d'hyperliens y renvoyant dans la réponse hypertexte ou sont transférées en tant que réponse hypertexte, **caractérisé en outre en ce que**, lors de la vérification de l'hyperlien, un certificat du serveur d'arrière-plan (90, 92) est vérifié ou une résolution de nom du serveur d'arrière-plan (90, 92) est vérifiée.

2. Procédé selon la revendication 1, **caractérisé en ce que**, lors de la mise à disposition (200) des données hypertextes, au moins une partie des données hypertextes est représentée sous forme d'au moins un hyperlien renvoyant à la au moins une partie des données hypertextes.

3. Procédé selon une des revendications de 1 à 2, **caractérisé en ce que**, lors de la vérification de l'hyperlien, en outre la disponibilité des autres données hypertextes auxquelles l'hyperlien renvoie, ou la disponibilité du service hypertexte auquel l'hyperlien renvoie est vérifiée.

4. Procédé selon une des revendications de 1 à 3, **caractérisé en ce que**, lors de la vérification de l'hyperlien, en outre le format d'un service hypertexte auquel le l'hyperlien renvoie est vérifié.

5. Procédé une des revendications de 1 à 4, **caractérisé en ce que** les données hypertextes mises à disposition représentent des données de résultat d'un appel, correspondant à la demande hypertexte, d'un service hypertexte par le serveur hypertexte (43).

6. Procédé selon une des revendications de 1 à 5, **caractérisé en ce que**, lors de la mise à disposition (200) des données hypertextes, au moins une partie des données hypertextes est chargée (240) par au moins le serveur d'arrière-plan (90) sur le serveur hypertexte (43).

7. Procédé selon une des revendications de 1 à 5, **caractérisé en ce que** l'hyperlien vérifié renvoie au serveur d'arrière-plan en tant qu'un deuxième serveur d'arrière-plan (92), et **en ce que**, lors de la mise à disposition (200) des données hypertextes, au moins une partie des données hypertextes est chargée (240) par au moins un premier serveur d'arrière-plan (90) sur le serveur hypertexte (43).

8. Procédé selon une des revendications de 1 à 7, **caractérisé en ce que** le serveur hypertexte (43) met à disposition du terminal (80) un accès privilégié à des données hypertextes ou à des services hypertextes auxquels renvoie, dans la réponse hypertexte, l'hyperlien vérifié.

9. Procédé selon une des revendications de 1 à 8, **caractérisé en ce que** le serveur hypertexte (43) reçoit la demande hypertexte sous forme cryptée et la décrypte, et envoie la réponse hypertexte sous forme cryptée au terminal (80).

10. Procédé selon une des revendications de 1 à 9, **caractérisé en ce que** le serveur hypertexte (43) est un serveur web et reçoit, au moyen du protocole de communication http, la demande hypertexte, et envoie la réponse hypertexte, et **en ce que** la demande hypertexte du terminal (80) est une adresse URL qui renvoie à une ressource web, en particulier à une page web ou à un service web.

11. Procédé selon la revendication 10, **caractérisé en ce que** le serveur hypertexte (43) génère la réponse hypertexte en tant qu'une page web structurée au moyen d'un langage de balisage, en particulier au moyen du HTML ou du WML.

12. Support de données (10) portable comprenant une mémoire (40), un processeur (50), une interface de communication de données (60) pour la communication avec un appareil de lecture, ainsi qu'une application serveur hypertexte (43) qui est exécutable sur le processeur (50) et est configurée pour
- par l'intermédiaire de l'interface de communication de données (60), recevoir une demande hypertexte provenant d'un terminal (80) relié au support de données (10) ;
- mettre à disposition les données hypertextes concernant la demande hypertexte ;
- envoyer les données hypertextes mises à disposition, en tant que réponse hypertexte, par l'intermédiaire de l'interface de communication de données (60) au terminal (80) ;
**caractérisé en ce que** l'application serveur hypertexte (43) est en outre configurée pour, lors de la mise à disposition des données hypertextes, vérifier au moins un hyperlien contenu dans la réponse hypertexte, et que la vérification de l'hyperlien comprend une vérification d'intégrité d'un serveur d'arrière-plan (90, 92) sur lequel se trouvent d'autres données hypertextes qui sont consultables par le terminal (80) et auxquelles l'hyperlien renvoie, ou un service hypertexte qui est consultable par le terminal (80) et auquel l'hyperlien renvoie, cependant qu'uniquement des données hypertextes pour lesquelles, dans le cadre de la vérification d'intégrité, les vérifications décrites des serveurs d'arrière-plan sur lesquels se trouvent les données hypertextes correspondantes ont abouti à un résultat positif sont intégrées au moyen d'hyperliens y renvoyant dans la réponse hypertexte ou sont transférées en tant que réponse hypertexte, **caractérisé en outre en ce que**, lors de la vérification de l'hyperlien, un certificat du serveur d'arrière-plan (90, 92) est vérifié ou une résolution de nom du serveur d'arrière-plan (90, 92) est vérifiée.

13. Support de données (10) portable selon la revendication 12, adapté à l'exécution d'un procédé selon une des revendications de 2 à 11.

14. Support de données (10) portable selon une des revendications 12 ou 13, **caractérisé en ce que** le support de données (10) est réalisé en tant que carte de téléphonie mobile (U)SIM ou en tant que carte à puce internet ou en tant que jeton USB.
